# FASCICULE DE BREVET EUROPEEN

(11) **EP 1 432 932 B1**
(45) Date de publication et mention de la délivrance du brevet: **02.11.2005**
(21) Numéro de dépôt: 02800149.3
(22) Date de dépôt: 12.08.2002
(51) Int. Cl.: F16H 48/08

(54) **DIFFERENTIEL DE TRANSMISSION DE COUPLE POUR VEHICULES AUTOMOBILES**
DREHMOMENTÜBERTRAGUNGSDIFFERENTIAL FÜR KRAFTFAHRZEUGE
TORQUE TRANSMISSION DIFFERENTIAL FOR MOTOR VEHICLES

(30) Priorité: 04.10.2001 FR 0112766
(43) Date de publication de la demande: 30.06.2004
(73) Titulaire: Peugeot Citroen Automobiles SA, 92200 Neuilly sur Seine (FR)
(72) Inventeur: SANTELLI, Franck, F-95240 Cormeilles-en-Parisis (FR)
(74) Mandataire: Thinat, Michel
(86) Numéro de dépôt international: PCT/FR2002/002855
(87) Numéro de publication internationale: WO 2003/029693

(56) Documents cités:
- EP-A- 0 420 149
- DE-A- 10 009 961
- US-A- 5 233 757
- US-A- 5 584 777

## Description

La présente invention concerne, de façon générale, les différentiels pour véhicules automobiles et un procédé de fabrication d'une famille de différentiels.

Plus précisément, l'invention concerne dans un premier aspect un différentiel de transmission de couple pour véhicule automobile, ce différentiel comprenant un corps de boîtier sélectivement entraîné en rotation autour d'un axe Y-Y', un arbre de roue motrice d'axe Y-Y', une pignorerie située à l'intérieur du corps de boîtier et transmettant le mouvement de rotation du corps de boîtier à l'arbre de roue motrice, et une muselière solidaire du corps de boîtier et interposée entre la pignonerie et la surface interne du corps de boîtier, la pignonerie comprenant une paire de pignons satellites coaxiaux coniques montés sur des pivots solidaires du corps de boîtier et d'axe Z-Z' perpendiculaire à l'axe Y-Y' et une paire de pignons planétaires coniques d'axe Y-Y', solidaires de l'arbre de roue motrice et engrenant avec les pignons satellites, la pignonerie s'inscrivant généralement dans une ellipsoïde de révolution et la muselière présentant la forme générale d'une zone ellipsoïdale de révolution concentrique à la pignonerie.

Des différentiels de ce type sont connus de l'art antérieur. Les muselières en particulier sont utilisées depuis plus de dix ans dans des différentiels transmettant des couples faibles.

La capacité en couple qu'un différentiel peut transmettre est directement liée à la taille de l'ellipsoïde dans laquelle la pignonerie s'inscrit. il existe typiquement deux modèles de différentiel : un premier permettant de transmettre des couples faibles et un second permettant de transmettre des couples élevés. Selon l'art antérieur, la pignonerie est de taille différente pour ces deux modèles, ce qui entraîne que les corps de boîtier sont également de tailles différentes, ainsi que tous les accessoires : coupelles de frictions, pivots de satellites etc... Les moyens de production de ces éléments doivent également pouvoir produire les deux tailles.

Dans ce contexte, l'invention a pour but de réduire les coûts liés aux différentiels en rendant certains éléments communs aux deux modèles de différentiel.

A cette fin et selon un premier aspect, l'invention concerne un différentiel, par ailleurs conforme à la définition générique qu'en donne le préambule ci-dessus, essentiellement caractérisé en ce que la muselière comprend au moins une première paire de cales d'épaisseur.

Dans un mode de réalisation possible, la muselière est constituée d'une coque mince présentant la forme d'une zone ellipsoïdale de révolution, les cales d'épaisseur de ladite première paire étant situées soit sur la face intérieure soit sur la face extérieure de la coque mince.

Avantageusement, la coque peut présenter la forme générale d'une zone ellipsoïdale de révolution, possédant au moins quatre orifices circulaires dont deux orifices de passage des pivots des pignons satellites et deux orifices de passage de l'arbre de roue motrice.

De préférence, la muselière peut comprendre au moins une deuxième paire de cales d'épaisseur, les cales d'épaisseur de la première paire étant sensiblement en forme de disques, chacune centrée sur un orifice de passage des pivots des pignons satellites et présentant en son centre un évidement de même diamètre que l'orifice correspondant, les cales d'épaisseur de la deuxième paire étant sensiblement en forme de disques, chacune centrée sur un orifice de l'arbre de roue motrice et présentant en son centre un évidement du même diamètre que l'orifice correspondant.

Par exemple, la muselière peut présenter une interruption suivant une méridienne située entre deux orifices.

Avantageusement, la muselière peut être une pièce moulée en matière synthétique tel qu'un polyamide.

De préférence, la première paire de cales d'épaisseur présente un diamètre sensiblement égal au diamètre des pignons satellites, et la seconde paire de cales d'épaisseur présente un diamètre sensiblement égal au diamètre des pignons planétaires.

Dans un second aspect, l'invention concerne un procédé de fabrication d'une famille de différentiels de transmission de couple, cette famille comprenant au moins un premier modèle de différentiel pour transmettre un premier couple relativement plus faible et un second modèle de différentiel pour transmettre un second couple relativement plus élevé, ce procédé comprenant les étapes consistant à fabriquer :
une première pignonerie, une première muselière et un corps de boîtier pour le premier modèle de différentiel, et
une seconde pignonerie, une seconde muselière et un corps de boîtier pour le second modèle de différentiel, caractérisé en ce que le corps de boîtier pour le premier modèle est identique au corps de boîtier pour le second modèle et en ce qu'on donne aux première et deuxième muselières, au moins localement, des première et seconde épaisseurs respectives différentes, la première épaisseur étant supérieure à la seconde.

Avantageusement, la première muselière peut comprendre des cales d'épaisseur, et la seconde muselière ne pas comprendre de cales d'épaisseur.

De préférence, la première muselière peut comprendre des premières cales d'épaisseur, la seconde muselière peut comprendre des secondes cales d'épaisseur, l'épaisseur des premières cales d'épaisseur étant supérieure à l'épaisseur des secondes cales d'épaisseur.

D'autres caractéristiques et avantages de l'invention ressortiront plus clairement de la description donnée ci-dessous, à titre indicatif et nullement limitatif, en référence aux dessins annexés dans lesquels :
- la figure 1 est une vue en perspective d'un différentiel selon l'invention à l'état assemblé, les pivots de satellites n'étant pas représentés.
- la figure 2 est une vue partielle éclatée du différentiel de la figure 1,
- la figure 3 est une vue en perspective de la muselière de la figure 2, selon un premier mode de réalisation,
- la figure 4 est une vue en de la muselière de la figure 2, selon un second mode de réalisation.
- la figure 5 est une vue partielle éclatée des deux familles de différentiels fabriqués avec le procédé selon l'invention.

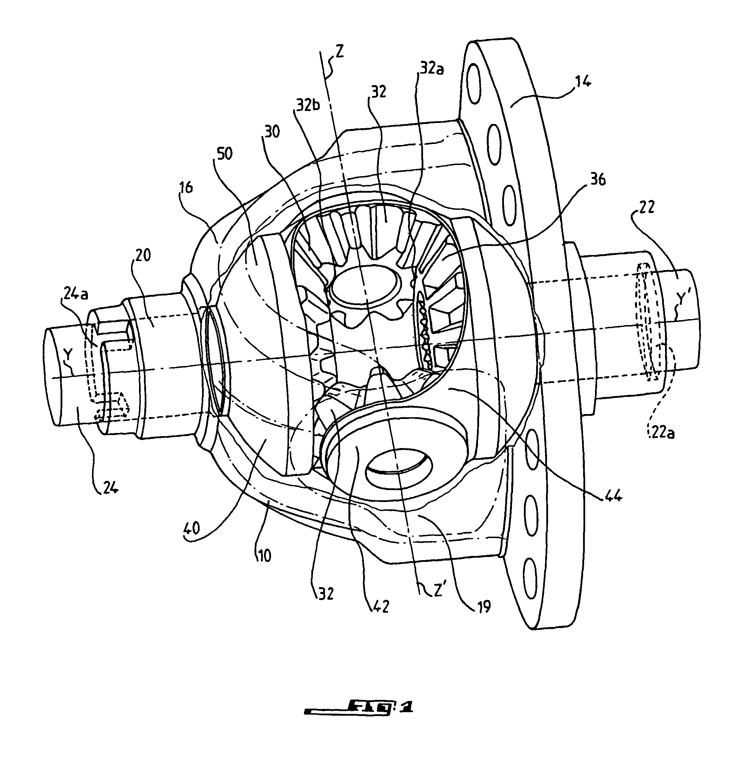

Comme le montre la figure 1, l'invention concerne un différentiel de transmission de couple pour véhicules automobiles, ce différentiel comprenant un corps de boîtier 10 sélectivement entraîné en rotation autour d'un axe Y-Y', un arbre de roue motrice 20 d'axe Y-Y', une pignonerie 30 située à l'intérieur du corps de boîtier 10, et une muselière 40.

La pignonerie 30 transmet le mouvement de rotation du corps de boîtier 10 à l'arbre de roue motrice 20. La muselière 40 est solidaire du corps de boîtier 10 et est interposée entre la pignonerie 30 et la surface interne 12 du corps de boîtier 10, de façon à réduire les frictions entre la pignonerie 30 et cette surface interne 12.

La pignonerie 30 est du type à train épicycloïdal, et comprend une paire de pignons satellites 32 coaxiaux, coniques, montés sur des pivots 34 solidaires du corps de boîtier 10, et une paire de pignons planétaires 36 coniques d'axe Y-Y', solidaires de l'arbre de roue motrice 20 et engrenant avec les pignons satellites 32. L'axe Z-Z' est perpendiculaire à l'axe Y-Y'.

La pignonerie 30 s'inscrit généralement dans une ellipsoïde de révolution autour d'un grand axe Z-Z' et de petit axe Y-Y', typiquement une sphère. La muselière 40 présente la forme générale d'une forme ellipsoïdale correspondante à celle de la pignonerie 30, et enveloppant celle-ci de façon concentrique.

Selon l'invention, le corps de boîtier 10 présente la forme générale d'une cloche d'axe Y-Y', comprenant une base 14 sélectivement entraînée en rotation par un dispositif extérieur de l'invention et non décrit, et une partie en cloche 16.

La base 14 présente la forme d'un disque d'axe Y-Y'. La partie en cloche 16 est une pièce de révolution autour de l'axe Y-Y', bridée sur la base 14.

L'arbre de roue motrice 20 comprend deux demi-arbres 22 et 24 coaxiaux. Le demi-arbre 22 est engagé dans un orifice 22a situé au centre de la base 14 et est solidaire d'un pignon de la paire de pignons planétaires 36 situé à l'intérieur de la partie en cloche 16. Le demi-arbre 24 est engagé dans un orifice 24a situé au sommet de la partie en cloche 16 et est solidaire de l'autre pignon de la paire de pignons planétaires 36 situé à l'intérieur de la partie en cloche 16.

La partie en cloche 16 comprend également deux autres orifices 19 situés sur l'axe Z-Z'. Les pivots 34 des pignons satellites 32 sont constitués d'un arbre unique traversant la partie en cloche 16. L'arbre 34 est fixé par une de ses extrémités dans un des orifices 19 et par son extrémité opposée dans l'autre orifice 19 situé de l'autre côté de la partie en cloche 16.

Les pignons satellites 32 sont montés libres en rotation à cet arbre 34 et engrènent chacun les deux pignons planétaires 36 par deux points diamétralement opposés 32a et 32b.

La muselière 40 est constituée d'une coque mince 44 et de deux paires de cales d'épaisseur 42 et 50. La coque mince 44 présente la forme d'une zone d'une ellipsoïde de révolution autour d'un grand axe Z-Z' et de petit axe Y-Y', cette zone étant délimitée par deux plans parallèles au plan P formé par les axes Z-Z' et Y-Y' et symétriques par rapport à celui-ci.

La coque mince 44 possède au moins quatre orifices circulaires dont deux orifices de passage des pivots 46 et deux orifices de passage de l'arbre de roue motrice 48.

La muselière 40 comprend deux paires de cales d'épaisseur, les cales d'épaisseur de la première paire 42 étant en forme de disques, chacune centrée sur un orifice de passage des pivots 46 et présentant en son centre un évidement de même diamètre que l'orifice correspondant , les cales d'épaisseur de la deuxième paire 50 étant sensiblement en forme de disques, chacune centrée sur un orifice de passage de l'arbre de roue motrice 48 et présentant en son centre un évidement de même diamètre que l'orifice correspondant.

La première paire de cales d'épaisseur 42 présente un diamètre sensiblement égal au diamètre des pignons satellites 32. La seconde paire de cales d'épaisseur 50 présente un diamètre sensiblement égal au diamètre des pignons planétaires 36.

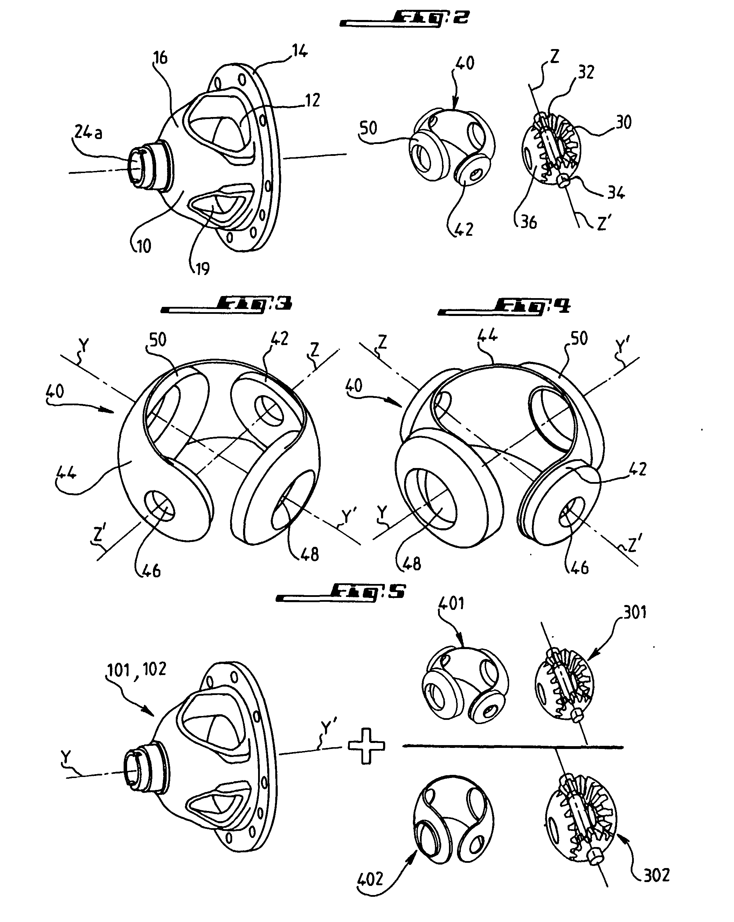

Dans un premier mode de réalisation de l'invention illustré sur la figure 3, les première et deuxième paires de cales 42 et 50 sont situées sur une face extérieure de la coque mince 44.

Dans un second mode de réalisation de l'invention illustré sur la figure 4, les première et deuxième paires de cales 42 et 50 sont situées sur une face intérieure de la coque mince 44.

La muselière 40 présente une interruption suivant une méridienne située entre deux orifices, un orifice de passage des pivots 46 et un orifice de passage de l'arbre de roue 48.

La muselière 40 est une pièce moulée en matière synthétique, typiquement en polymère tel qu'un polyamide.

L'invention concerne selon un second aspect un procédé de fabrication d'une famille de différentiels de transmission de couple, cette famille comprenant au moins un premier modèle de différentiel pour transmettre un premier couple relativement plus faible et un second modèle de différentiel pour transmettre un second couple relativement plus élevé.

Ce procédé comprend les étapes consistant à fabriquer :
une première pignonerie 301, une première muselière 401 et un corps de boîtier 101 pour le premier modèle de différentiel, et
une seconde pignonerie 302, une seconde muselière 402 et un corps de boîtier 102 pour le second modèle de différentiel.

Selon l'invention, le corps de boîtier pour le premier modèle 101 est identique au corps de boîtier pour le second modèle 102 comme le montre la figure 5.

La première muselière 401 comprend des premières cales d'épaisseur, la seconde muselière 402 comprend des secondes cales d'épaisseur, l'épaisseur des premières cales d'épaisseur étant supérieure à l'épaisseur des secondes cales d'épaisseur.

Les secondes cales d'épaisseur compensent exactement le jeu laissé entre la pignonerie 302 d'une part et la surface interne du corps de boîtier 101/102.

La première pignonerie 301 étant de taille inférieure à la seconde pignonerie 302 alors que la taille du corps de boîtier 101/102 est maintenue constante, il est nécessaire d'augmenter l'épaisseur des premières cales pour continuer à compenser le jeu avec la surface interne 12.

Dans un autre mode de réalisation illustré sur la figure 5, la première muselière 401 comprend des cales d'épaisseur, et la seconde muselière 402 ne comprend pas de cales d'épaisseur, seule la coque mince 44 étant interposée entre la pignonerie 302 et la surface interne 12.

On comprend bien que l'invention permet d'utiliser le même corps de boîtier 10 pour transmettre des couples différents. Le corps de boîtier 10 et ses accessoires peuvent être standardisés et il en résulte des gains importants pour la production de ces pièces (gamme plus étroite) et dans la gestion des pièces détachées.

## Revendications

1. Différentiel de transmission de couple pour véhicule automobile, ce différentiel comprenant un corps de boîtier (10) sélectivement entraîné en rotation autour d'un axe Y-Y', un arbre de roue motrice (20) d'axe Y-Y', une pignonerie (30) située à l'intérieur du corps de boîtier (10) et transmettant le mouvement de rotation du corps de boîtier (10) à l'arbre de roue motrice (20), et une muselière (40) solidaire du corps de boîtier (10)et interposée entre la pignonerie (30) et la surface interne (12) du corps de boîtier (10), la pignonerie (30) comprenant une paire de pignons satellites (32) coaxiaux coniques montés sur des pivots (34) solidaires du corps du boîtier (10), et d'axe Z-Z' perpendiculaire à l'axe Y-Y', et une paire de pignons planétaires (36) coniques d'axe Y-Y', solidaires de l'arbre de roue motrice (20) et engrenant avec les pignons satellites (32), la pignonerie (30) s'inscrivant généralement dans une ellipsoïde de révolution et la muselière (40) présentant la forme générale d'une zone ellipsoïdale de révolution concentrique à la pignonerie (30), **caractérisé en ce que** la muselière (40) comprend au moins une première paire de cales d'épaisseur (42).

2. Différentiel de transmission de couple selon la revendication 1, **caractérisé en ce que** la muselière (40) est constituée d'une coque mince (44) présentant la forme d'une zone ellipsoïdale de révolution, les cales d'épaisseur (42) de ladite première paire étant situées soit sur la face intérieure soit sur la face extérieure de la coque mince (44).

3. Différentiel de transmission de couple selon la revendication 2, **caractérisé en ce que** la coque (44) présente la forme générale d'une zone ellipsoïdale de révolution, possédant au moins quatre orifices circulaires dont deux orifices de passage des pivots (46) et deux orifices de passage de l'arbre de roue motrice (48).

4. Différentiel de transmission de couple selon la revendication 3, **caractérisé en ce que** la muselière (40) comprend au moins une deuxième paire de cales d'épaisseur (50), les cales d'épaisseur (42) de la première paire étant sensiblement en forme de disques, chacune centrée sur un orifice de passage des pivots (46) et présentant en son centre un évidement de même diamètre que l'orifice (46) correspondant, les cales d'épaisseur (50) de la deuxième paire étant sensiblement en forme de disques, chacune centrée sur un orifice de passage de l'arbre de roue motrice (48) et présentant en son centre un évidement de même diamètre que l'orifice (48) correspondant.

5. Différentiel de transmission de couple selon l'une quelconque des revendications 1 à 4, **caractérisé en ce que** la muselière (40) présente une interruption suivant une méridienne située entre deux orifices.

6. Différentiel de transmission de couple selon l'une quelconque des revendications précédentes, **caractérisé en ce que** la muselière (40) est une pièce moulée en matière synthétique, tel qu'un polyamide.

7. Différentiel de transmission de couple selon la revendication 4, **caractérisé en ce que** la première paire de cales d'épaisseur (42) présente un diamètre sensiblement égal au diamètre des pignons satellites (32) et la seconde paire de cales d'épaisseur (50) présente un diamètre sensiblement égal au diamètre des pignons planétaires (36)

8. Procédé de fabrication d'une famille de différentiels de transmission de couple, cette famille comprenant au moins un premier modèle de différentiel pour transmettre un premier couple relativement plus faible et un second modèle de différentiel pour transmettre un second couple relativement plus élevé, ce procédé comprenant les étapes consistant à fabriquer :
une première pignonerie (301), une première muselière (401) et un corps de boîtier (101) pour le premier modèle de différentiel, et
une seconde pignonerie (302), une seconde muselière (402) et un corps de boîtier (102) pour le second modèle de différentiel
**caractérisé en ce que** le corps de boîtier (101) pour le premier modèle est identique au corps de boîtier (102) pour le second modèle et **en ce qu'**on donne aux première et seconde muselières (401) et (402), au moins localement, des première et secondes épaisseurs respectives différentes, la première épaisseur étant supérieure à la seconde.

9. Procédé de fabrication selon la revendication 8, **caractérisé en ce que** la première muselière (401) comprend des cales d'épaisseur, et la seconde muselière (402)ne comprend pas de cales d'épaisseur.

10. Procédé de fabrication selon la revendication 8, **caractérisé en ce que** la première muselière (401) comprend des premières cales d'épaisseur, la seconde muselière (402) comprend des secondes cales d'épaisseur, l'épaisseur des première cales d'épaisseur étant supérieure à l'épaisseur des secondes cales d'épaisseur.

## Patentansprüche

1. Drehmomentübertragungsdifferential für Kraftfahrzeuge, wobei dieses Differential einen Gehäusekörper (10) enthält, der selektiv um eine Achse Y-Y' drehend angetrieben wird, sowie eine Antriebsradwelle (20) mit der Achse Y-Y', ein Zahnradgetriebe (30), das sich innerhalb des Gehäusekörpers (10) befindet und die Drehbewegung des Gehäusekörpers (10) auf die Antriebsradwelle (20) überträgt, und einen Käfig (40), der fest mit dem Gehäusekörper (10) verbunden ist und zwischen Zahnradgetriebe (30) und Innenfläche (12) des Gehäusekörpers (10) eingesetzt ist, wobei das Zahnradgetriebe (30) ein Paar koaxialer Ausgleichskegelräder (32) enthält, die an fest mit dem Gehäusekörper (10) verbundenen Drehzapfen (34) angebracht sind und die senkrecht zur Achse Y-Y' verlaufende Achse Z-Z' haben, sowie ein Paar Planetenkegelräder (36) mit der Achse Y-Y', die fest mit der Antriebsradwelle (20) verbunden sind und mit den Ausgleichskegelrädern (32) kämmen, wobei das Zahnradgetriebe (30) sich insgesamt in ein Umdrehungsellipsoid einbeschreibt und der Käfig (40) insgesamt die Form eines konzentrisch zum Zahnradgetriebe (30) verlaufenden Umdrehungsellipsoidbereichs aufweist, **dadurch gekennzeichnet, dass** der Käfig (40) zumindest ein erstes Paar Unterlegkeile (42) enthält.

2. Drehmomentübertragungsdifferential nach Anspruch 1, **dadurch gekennzeichnet, dass** der Käfig (40) aus einer dünnen Schale (44) besteht, welche die Form eines Umdrehungsellipsoidbereichs aufweist, wobei die Unterlegkeile (42) des genannten ersten Paares entweder auf der Innenseite oder auf der Außenseite der dünnen Schale (44) liegen.

3. Drehmomentübertragungsdifferential nach Anspruch 2, **dadurch gekennzeichnet, dass** die Schale (44) insgesamt die Form eines Umdrehungsellipsoidbereichs aufweist, der zumindest vier kreisrunde Öffnungen enthält, von denen zwei Öffnungen zum Durchtritt der Drehzapfen (46) und zwei Öffnungen zum Durchtritt der Antriebsradwelle (48) dienen.

4. Drehmomentübertragungsdifferential nach Anspruch 3, **dadurch gekennzeichnet, dass** der Käfig (40) zumindest ein zweites Paar Unterlegkeile (50) enthält, wobei die Unterlegkeile (42) des ersten Paares im wesentlichen scheibenförmig sind, jeweils auf eine Durchtrittsöffnung (46) für die Drehzapfen zentriert sind und in ihrem Mittelpunkt eine Ausnehmung aufweisen, die im Durchmesser gleich der entsprechenden Öffnung (46) ist, wobei die Unterlegkeile (50) des zweiten Paares im wesentlichen scheibenförmig sind, jeweils auf eine Durchtrittsöffnung (48) für die Antriebsradwelle zentriert sind und in ihrem Mittelpunkt eine Ausnehmung aufweisen, die im Durchmesser gleich der entsprechenden Öffnung (48) ist.

5. Drehmomentübertragungsdifferential nach einem der Ansprüche 1 bis 4, **dadurch gekennzeichnet, dass** der Käfig (40) eine Lücke entlang eines Längenhalbkreises zwischen zwei Öffnungen aufweist.

6. Drehmomentübertragungsdifferential nach einem der vorangehenden Ansprüche, **dadurch gekennzeichnet, dass** der Käfig (40) ein Formteil aus Kunststoff ist, wie etwa aus Polyamid.

7. Drehmomentübertragungsdifferential nach Anspruch 4, **dadurch gekennzeichnet, dass** das erste Paar von Unterlegkeilen (42) einen Durchmesser im wesentlichen gleich dem Durchmesser der Ausgleichsräder (32) aufweist und das zweite Paar von Unterlegkeilen (50) einen Durchmesser im wesentlichen gleich dem Durchmesser der Planetenräder (36) aufweist.

8. Verfahren zum Herstellen eines Satzes von Drehmomentübertragungsdifferentialen, wobei dieser Satz zumindest ein erstes Differentialmodell zum Übertragen eines ersten relativ schwächeren Drehmoments und ein zweites Differentialmodell zum Übertragen eines zweiten relativ höheren Drehmoments enthält, wobei dieses Verfahren die Schritte umfasst, die darin bestehen:
- ein erstes Zahnradgetriebe (301), einen ersten Käfig (401) und einen Gehäusekörper (101) für das erste Differentialmodell herzustellen, und
- ein zweites Zahnradgetriebe (302), einen zweiten Käfig (402) und einen Gehäusekörper (102) für das zweite Differentialmodell herzustellen,
**dadurch gekennzeichnet, dass** der Gehäusekörper (101) für das erste Modell identisch ist mit dem Gehäusekörper (102) für das zweite Modell und dass dem ersten und dem zweiten Käfig (401) und (402) zumindest bereichsweise jeweils eine erste bzw. eine zweie unterschiedliche Dicke verliehen wird, wobei die erste Dicke größer als die zweite ist.

9. Herstellungsverfahren nach Anspruch 8, **dadurch gekennzeichnet, dass** der erste Käfig (401) Unterlegkeile enthält und der zweite Käfig (402) keine Unterlegkeile enthält.

10. Herstellungsverfahren nach Anspruch 8, **dadurch gekennzeichnet, dass** der erste Käfig (401) erste Unterlegkeile enthält und der zweite Käfig (402) zweite Unterlegkeile enthält, wobei die Dicke der ersten Unterlegkeile größer ist als die Dicke der zweiten Unterlegkeile.

## Claims

1. Torque transmission differential for a motor vehicle, comprising a case (10) selectively rotated about an axis Y-Y', a wheel drive axle shaft (20) having axis Y-Y', a gear train (30) inside the case (10) and which transmits the rotational movement of the case (10) to the wheel drive axle shaft (20), and an adaptor (40) fastened to the case (10) and disposed between the gear train (30) and the internal surface (12) of the case (10), wherein the gear train (30) comprises a pair of coaxial planetary bevel gears (32) mounted on pivots (34) connected to the case (10) and having an axis Z-Z' perpendicular to the axis Y-Y' and a pair of differential ring bevel gears (36) having axis Y-Y' which are joined to the wheel drive axle shaft (20) and which mesh with the planetary gears (32), the gear train (30) generally lying within an ellipsoid of revolution, and the adaptor (40) has the general shape of an ellipsoidal area of revolution concentric with the gear train (30), which torque transmission differential is **characterised in that** the adaptor (40) comprises at least one first pair of shims (42).

2. Torque transmission differential according to claim 1, **characterised in that** the adaptor (40) comprises a thin shell (44) having the shape of an ellipsoidal area of revolution and the shims (42) of said first pair are situated either on the interior face or on the exterior face of the thin shell (44).

3. Torque transmission differential according to claim 2, **characterised in that** the thin shell (44) has the general shape of an ellipsoidal area of revolution and has at least four circular openings of which two are pivot openings (46) and two are wheel drive axle shaft openings (48).

4. Torque transmission differential according to claim 3, **characterised in that** the adaptor (40) has a second pair of shims (50), the shims (42) of the first pair are each substantially disc-shaped and centred on a pivot opening (46) and has at its centre a recess of the same diameter as the corresponding opening (46), and the shims (50) of the second pair are each substantially disc-shaped and centred on a wheel drive axle shaft opening (48) and has at its centre a recess of the same diameter as the corresponding opening (48).

5. Torque transmission differential according to any one of claims 1 to 4, **characterised in that** the adaptor (40) has an interruption along a meridian between two openings.

6. Torque transmission differential according to any one of the preceding claims, **characterised in that** the adaptor (40) is a moulded part made of a synthetic material such as a polyamide.

7. Torque transmission differential according to claim 4, **characterised in that** the first pair of shims (42) has a diameter substantially equal to the diameter of the planetary gears (32) and the second pair of shims (50) has a diameter substantially equal to the diameter of the differential ring gears (36).

8. Method of manufacturing a family of torque transmission differentials comprising a first differential model for transmitting a relatively lower first torque and a second differential model for transmitting a relatively higher second torque, this method comprising the steps of manufacturing:
a first gear train (301), a first adaptor (401) and a case (101) for the first differential model, and
a second gear train (302), a second adaptor (402) and a case (102) for the second differential model,
which method is **characterised in that** the case (101) for the first model is identical to the case (102) for the second model, the first and second adaptors (401) and (402) have, at least locally, respective different first and second thicknesses, and the first thickness is greater than the second thickness.

9. Manufacturing method according to claim 8, **characterised in that** the first adaptor (401) comprises shims and the second adaptor (402) does not comprise shims.

10. Manufacturing method according to claim 8, **characterised in that** the first adaptor (401) comprises first shims, the second adaptor (402) comprises second shims, and the thickness of the first shims is greater than the thickness of the second shims.
